# EUROPEAN PATENT SPECIFICATION

(11) **EP 1 203 737 B1**
(45) Date of publication and mention of the grant of the patent: **02.01.2004**
(21) Application number: 01203866.7
(22) Date of filing: 12.10.2001
(51) Int. Cl.: B65G 49/08

(54) **Apparatus for loading and unloading of tiles from roller stillages**
Vorrichtung zum Be- und Entladen von Rollenpaletten für Fliesen
Dispositif pour le chargement et le déchargement de tuiles de palettes à rouleaux

(30) Priority: 16.10.2000 IT MO000222
(43) Date of publication of application: 08.05.2002
(73) Proprietor: Sititech Sassuolo S.r.l., 41049 Sassuolo (Modena) (IT)
(72) Inventor: Bossetti, Renato, 28100 Novara (IT); Moreselli, Ulderico, 41100 Modena (IT)
(74) Representative: Gotra, Stefano

(56) References cited:
- EP-A- 0 301 231
- EP-A- 0 999 158
- FR-A- 1 538 657
- IT-B- 1 190 308

## Description

The prior art teaches loaders and unloaders for storing and transporting tiles on roller boxes which operate at the ends of lines and which essentially comprise: a fixed roller plane, supplied with tiles from the line, which tiles are translated and arranged side-by-side so as to form tile layers; a mobile roller plane then transfers the tiles from the fixed plane to single roller planes located inside the stillages (or vice versa). The structures of these machines normally require the positioning of two stillages so that the loading or unloading operations are not subject to long delays during substitution of one of the two stillages (while one box is taken away to be replaced by an empty one, loading continues into the other stillage).

In prior-art solutions the stations housing the stillages, which comprise devices for moving the roller planes in the stillages, are of such a structure that the resulting mass considerably influences the positioning of the tile conveyor lines as well as all other process lines (firing, drying, glazing). For example, in the case of transport lines to the glazing station, the stations are arranged so that the tracks and directions for stationing and removing the roller stillages are perpendicular to the line. This means leaving considerable space between one line and an adjacent line, necessary for housing the stillages and relative devices for moving the roller planes therein, as well as for carrying out the stationing and removing operations of the stillages from the loading and unloading apparatus.

Turning now to the case of firing lines, known-type storage stations are positioned at the ends of a chain-conveyor line which connects them to the kiln loading or unloading bench (according to which of the operations is being carried out). These connecting lines often exhibit a 90° bend for transporting the tiles in a parallel direction to the direction of the kiln. This also takes up considerable space, due to the size of the apparatus and the necessary transport lines, the indispensable service spaces for unloading, as well as the positioning of the roller stillages at their stations by the machines.

EP-A-0 999 158 discloses, for example, an apparatus suitable for loading and unloading tiles from roller stillages.

The prior art realisations have the relevant limitation of having to locate the productive sections, whether glazing, drying or firing lines, at considerable distances from each other, with a consequent waste of precious space.

The main aim of the present invention is to obviate the limitations and drawbacks of the prior art by providing an apparatus for loading and unloading tiles from the roller stillages which has a limited transversal mass with respect to the line.

A further aim of the present invention is to provide a loading/unloading apparatus which is structured such as to dispense with the necessity of predisposing compensating devices used for temporary storage in order to keep the line operating.

An advantage of the invention is its simplicity.

These aims and advantages and others besides are all achieved by the invention as it is characterised in the accompanying claims.

Further characteristics and advantages of the present invention will better emerge from the detailed description that follows of a preferred but non-exclusive embodiment of the invention, illustrated purely by way of nonlimiting example in the accompanying figures of the drawings, in which:

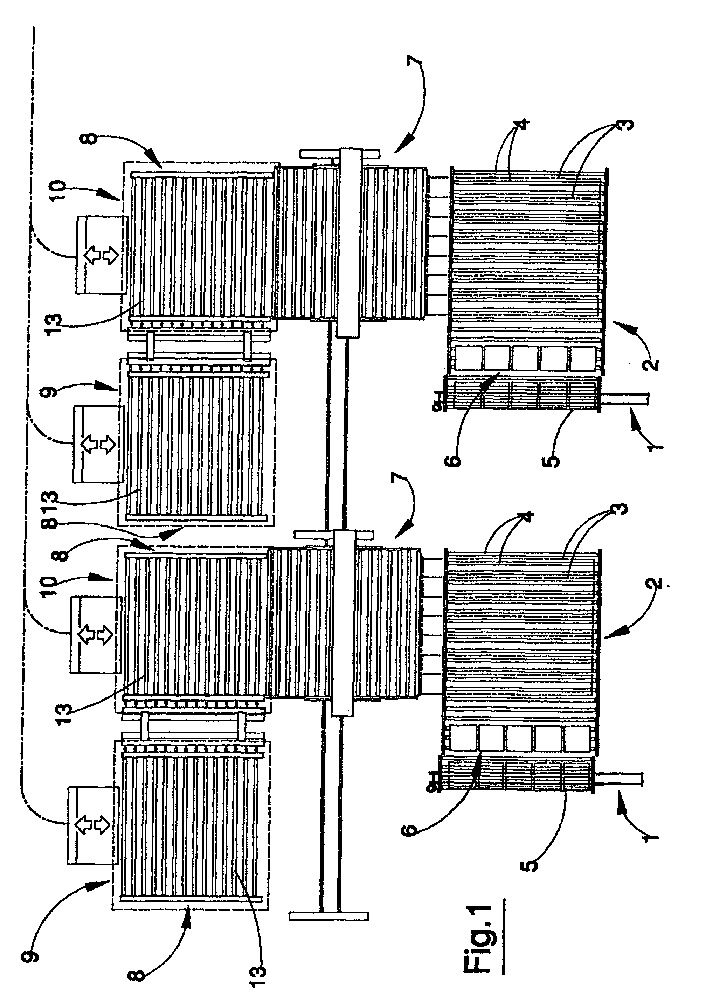

figure 1 is a schematic plan view from above, comprising two conveyor lines arranged side-by-side;

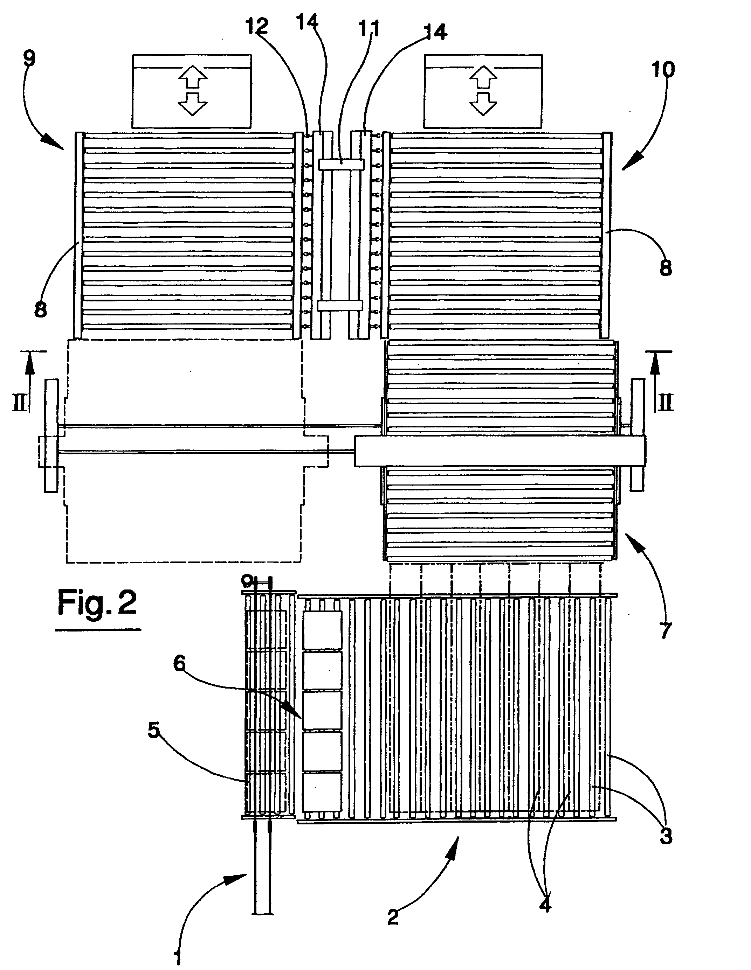

figure 2 is an enlarged-scale view of a detail of figure one, relating to one line;

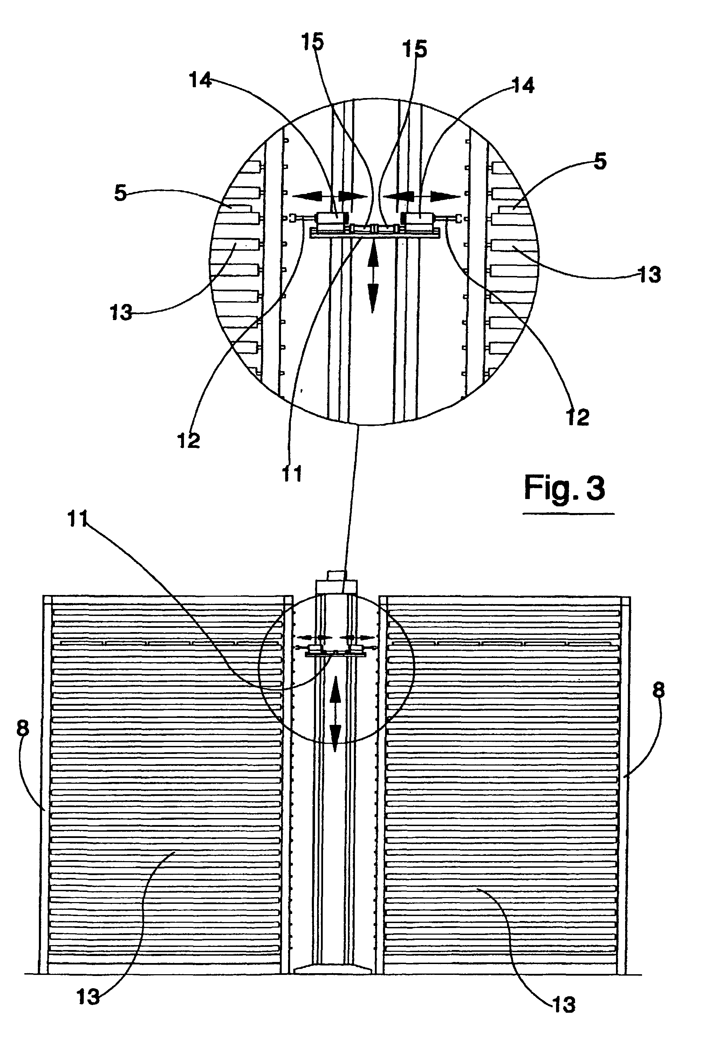

figure 3 is a schematic section made according to line II-II of figure 2;
figure 4 is a schematic view from above comprising an end section of a production line (a firing line);
figure 5 is a schematic plan view from above of a further embodiment of the invention, located at an end of a production line (firing) constituted by a kiln for firing tiles;
figure 6 is a schematic plan view from above of a further embodiment of the invention, comprising an end section of a production line (firing) constituted by a kiln for firing tiles.

Figures from 1 to 3 show an apparatus for loading (or unloading) tiles from a conveyor line 1 to roller stillages, comprising:
a fixed roller plane 2, constituted by parallel driven rollers 3, for forming layers of tiles 5, supplied by a conveyor line 1 constituted in the illustrated embodiment by an end section of a glazing line, along which the tiles 5 are conveyed one behind another at a predetermined reciprocal distance.

The fixed roller plane 2 is associated to the conveyor line 1, with the rollers 3 arranged parallel to the advancement direction of the transport line, so that rows of tiles, formed on the line, are translated on the fixed roller plane 2 in a perpendicular direction to the rows and the line. The rows 6 are translated from the line 1 to the fixed roller plane 2 (or vice versa) following known methods using rollers 15 arranged parallel between the conveyor chains constituting the line 1.

The rows 6 are accumulated on the fixed roller plane 2 until a layer of tiles 5 is formed, which corresponds in dimensions exactly to the roller plane situated in the roller stillage 8.

The transfer of the single layer of tiles from the fixed roller plane 2 to the roller plane of the stillage 8 (or vice versa) is done using a mobile roller plane 7, which can be coupled in a position facing the external loading (or unloading) side of the fixed roller plane 2. When coupled, external sides of the roller plane 7 are parallel to the rows 6 of tiles formed on the line 1; the rows 6 of tiles are translated and accumulated on the fixed roller plane 2.

The mobile roller plane 7 can be moved and positioned within a vertical plane that is parallel to the external side of the fixed roller plane 2, i.e. perpendicular to the line 1 transport direction.

The mobile roller plane 7 can thus "serve" the two stillages 8 located in two adjacent loading (or unloading) stations 9 and 10, which are aligned on a vertical plane which is perpendicular to the line 1 conveying direction.

The mobile roller 7 can therefore be moved to couple with the single roller planes in the two stillages 8 housed in the stations 9 and 10.

The width of the front of the mobile roller 7 is in fact the same as the frontal width of the stillages 8, and can be coupled thereto. Similarly the external loading (or unloading) side of the fixed roller plane 2 - which is parallel to the perpendicular direction along which the rows 6 of tiles, formed on the line 1, are translated and accumulated to form a layer of tiles on the fixed roller plane 2 - exhibits a length which is equal to the frontal width of the mobile roller plane 7.

The controlled translation of the single layer of tiles accumulated on the fixed roller 2 onto the mobile roller 7 (in a perpendicular direction to the accumulation direction of the rows 6 of tiles) is performed by means comprising a plurality of conveyor chains 4 positioned between the parallel rollers 3 constituting the fixed roller 2, which chains 4 can be lifted on command from a lower inactive position into an upper active position, at which upper position they generate a support and transport plane for the tiles 5 located above the conveyor plane generated by the rollers 3.

The loading (or unloading) stations 9 and 10, housing the stillages 8, are separated by a device for controlledly imparting rotary drive to the stillage 8 rollers, constituted by a single elongate horizontal frame 11 which translates vertically and is provided with two series of organs 12 for moving the rollers, which organs are diametrically opposite one another and which are independently actuated to interact with the ends of the roller planes 13 of the stillage 8.

Each series of organs 12 for moving the rollers in mounted on a support element 14 which can be commanded to move, by means of actuators 15, from an internal rest position to an external work position, at which the relative organs 12 can interact with the ends of the rollers 13 of a roller plane in a stillage and vice-versa.

In the illustrated embodiment, a complete layer of tiles is prepared, which is then transferred as a unit onto the mobile roller 7, thence to be translated onto a plane in one of the two stillages 8.

Thanks to the configuration of the apparatus the time necessary for the mobile roller 7 to move to the predetermined stillage roller plane and then to return to the fixed roller plane 2 is less than the time needed for the formation of a new layer of tiles on the fixed plane 2.

The work cycle described herein below relates to a stillage 8 loading operation. The apparatus of the invention is structurally suitable also for a tile unloading operation from the stillage 8 to the line 1.

The invention exhibits a very limited overall transversal mass with respect to the line 1, which leads to a considerable reduction in distance between adjacent lines and makes manoeuvring the stillages 8 in and out of the stations 9 and 10 easier.

A further advantage consists in the fact that there is no need to provide compensators functioning as emergency storage for the tiles on the fixed roller plane 2.

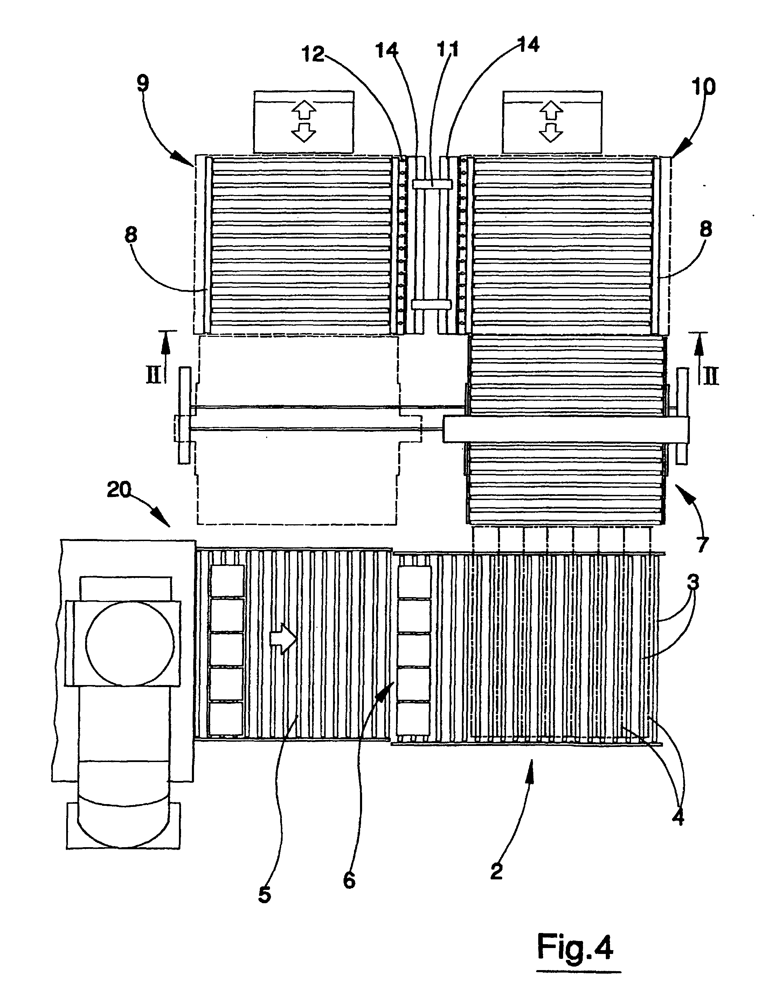

The embodiment illustrated in figure 4 features a configuration for unloading tiles from the roller stillage 8 and removing them to the production or other lines. The embodiment has the advantage of saving the space needed for the storage station in proximity of the loading/unloading end of the kiln.

The loading/unloading roller plane 20 directly faces the previously-described fixed roller plane 2.

In this case the transport line supplying or receiving the tiles from the storage apparatus is substituted by the loading/unloading roller provided on the kiln. The operation of the rest of the apparatus is the same as in the first embodiment.

This embodiment has the advantage of saving the space occupied by the connection lines usually place between the loading/unloading roller pane and the storage station.

Similarly to the first embodiment, this further embodiment also obviates the need for a compensating storage system to come into use when the stillages are being changed.

This embodiment allows for considerable simplification of the storage station structure.

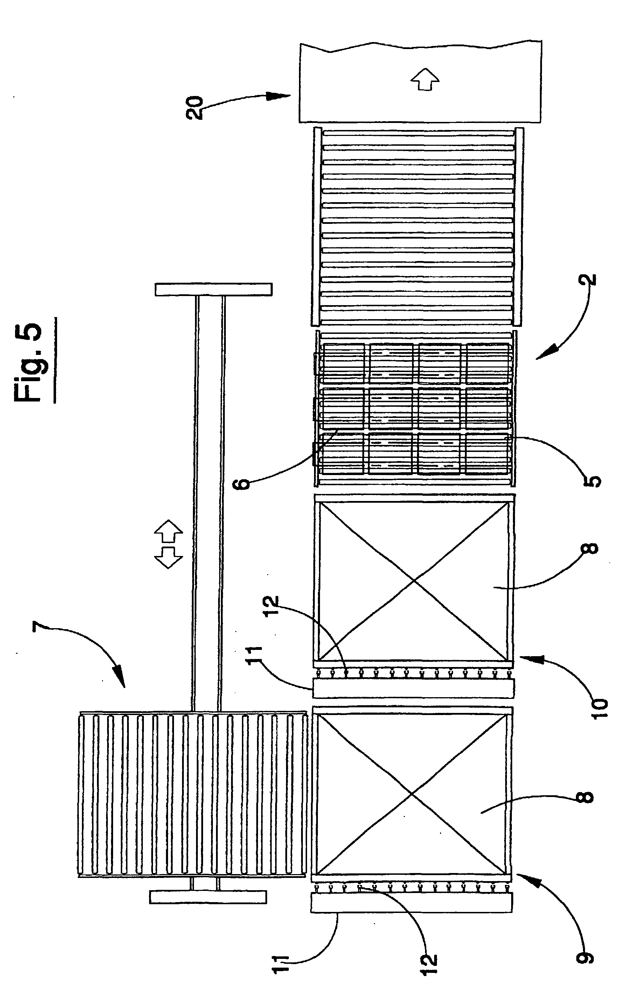

In the illustrated embodiment in figure 5 there is a configuration for loading and unloading (the equipment can be used equally for either) the tiles from a plurality of roller stillages (in the example, two) onto a production line 20 constituted by a roller stillage for firing ceramic tiles.

In this embodiment, functionally equivalent to the embodiment of figure 4, the stations 9 and 10, in which the stillages 8 are positioned, are aligned to the production line 20 in such a way that the mobile roller plane 7, in order to transfer the layers of tiles 5 from the fixed roller plane 2 to the roller stillages 8 (or vice versa) has to translate in a parallel direction to the axis of the production line 20 in three positions: a first position in which it is facing the fixed roller plane and the other two positions in which it faces the stillage 8 roller planes positioned in the stations 9 and 10 situated side-by-side, which two stations are arranged on the same longitudinal axis as the production line 20.

For this purpose, a transmission device is predisposed at each of the stations 9 and 10 which on command drives the rollers of the single roller planes in the stillages 8; these single roller planes are constituted by a horizontal elongate frame 11 which is made to translate in a vertical direction and which is provided with a series of organs 12 for imparting motion to the rollers.

The illustrated embodiment has a transversal mass which is even further reduced with respect to the previously-described embodiment, and has the same advantage of not requiring the use of any temporary storage for use when a stillage 8 is being changed.

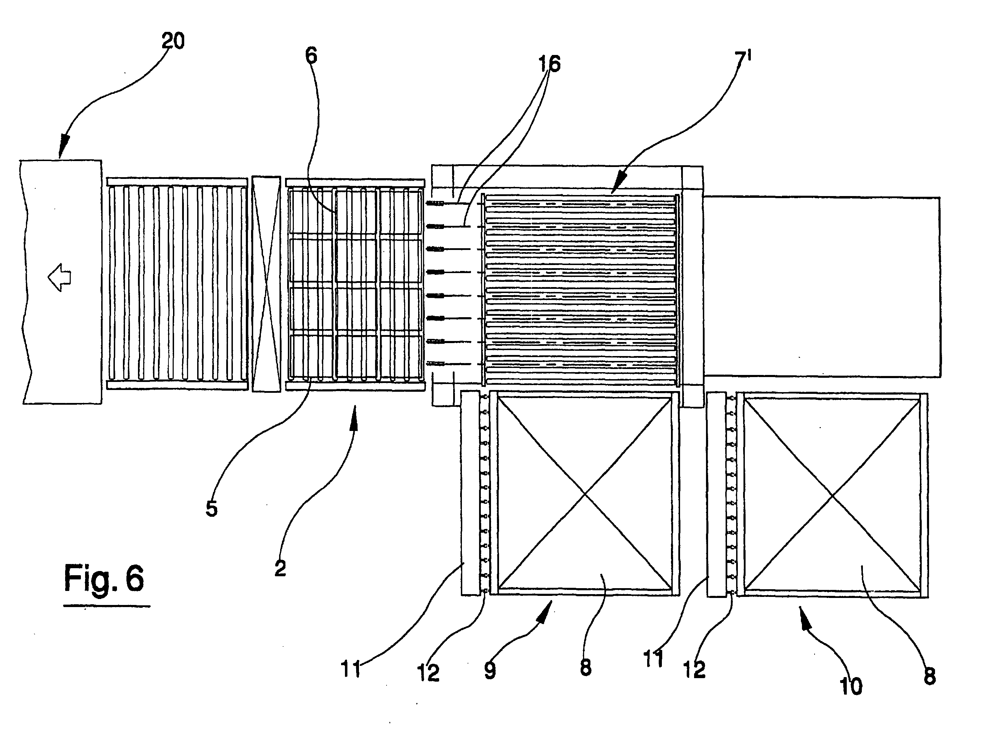

In the further embodiment illustrated in figure 6, a very advantageous configuration for the tile unloading operation is shown, where tiles can be unloaded from more than one stillage 8 and sent on to the production line (kiln), and vice versa. In this embodiment too the configuration is completely reversible.

The peculiarity of this further embodiment consists in the location of the mobile roller plane 7' in front of the production line 20 with its axis coinciding with the longitudinal axis of the production line itself and the stillage 8 arranged in the side-by-side stations 9 and 10.

The mobile roller plane 7' is positionable in a vertical plane which is parallel to the longitudinal axis of the production line 20.

For transfer of the tiles 5 between the mobile roller plane 7' and the fixed roller plane 2, usual means of chain conveyor 16 are provided, located parallel in the spaces between roller and having two working positions; a lower inactive position underlying the rest plane constituted by the rollers of the roller plane, and an upper active position overlying the roller plane.

This realisation has the advantage, with respect to the embodiment of figure 5, of reducing the run the mobile roller plane 7' has to make to serve the side-by-side roller stillages 8, which enables faster production times for the same amount of movement, and a subsequent reduction in wear on the mechanical components in relative movement. For the same reason, the roller plane 7' support structures can be made lighter, with evident advantages in terms of cost and construction. This configuration is also the least massy of all embodiments, both longitudinally and transversally.

## Claims

1. An apparatus for loading and unloading tiles (5) from roller stillages, comprising: a fixed roller plane (2), supplied by a conveyor line for formation of layers of tiles, which fixed roller plane (2) is associated to the conveyor line (1) so that rows (6) of tiles (5) formed on the conveyor line can be translated onto the fixed roller plane in a perpendicular direction to the rows formed on the conveyor line; a mobile roller plane for transferring layers of tiles from the fixed roller plane to single roller planes of the stillages and vice versa, the mobile roller plane (7, 7') being couplable with the fixed roller plane (2) in a position which is facing an external side of the fixed roller plane (2); the rollers (3) of the fixed roller plane (2) being perpendicular to the direction along which the rows (6) of tiles (5) formed on the conveyor line (1, 20) are translated and accumulated on the fixed roller plane (2); means being provided for enabling controlled translation of the tiles accumulated on the fixed roller plane (2) onto the mobile roller plane (7) in a perpendicular direction to the direction along which the rows (6) of tiles (5) are accumulated on the conveyor line (1); the mobile roller plane (7) being positionable in a vertical plane arranged parallel or perpendicular to the external side of the fixed roller plane in order to be coupled to roller planes of at least two stillages (8) located in at least two loading or unloading stations (9 and 10) situated side-by-side.

2. The apparatus of claim 1, **characterised in that** a frontal width of the mobile roller (7), perpendicular to the direction of transport, is equal to a corresponding frontal width of the roller planes of the stillages (8) to which the mobile roller (7) is coupled; the external side for loading or unloading of the fixed roller plane (2), parallel to the perpendicular direction along which the rows (6) of tiles formed on the conveyor line are translated and accumulated to form a layer of tiles on the fixed roller plane (2), having at least one tract of length thereof which is equal to the frontal width of the mobile roller plane (7), to which at least one tract of length the mobile roller plane (7) can be coupled.

3. The apparatus of claim 1 or 2, **characterised in that** the means for controlled translation comprise a plurality of conveyor chains (4) positioned between parallel rollers (3) of the fixed roller plane (2), which plurality of conveyor chains (4) can be raised on command from an inactive lower position into an active upper position at which a rest and transport plane is created for the tiles (5) located above the conveyor plane generated by the parallel rollers (3).

4. The apparatus of claim 3, **characterised in that** the loading and unloading stations (9,10) housing the stillages (8) are separated from a device for transmission, on command, of rotation drive to rollers (13) of roller planes of the stillages (8); the device for transmission being commanded to translate in a vertical direction and being provided with two series of organs (12) for moving the rollers (13) which are diametrically opposite and actuated independently of each other to interact with ends of the rollers (13) of the stillages.

5. The apparatus of claim 5, **characterised in that** each of the series of organs (12) for moving the rollers (13) is mounted on a support element (14) which is commanded to move by actuators (15) from an internal rest position to an external working position, at which the series of organs (12) interact with the ends of the rollers (13) of one stillage (8); this action is reversible.

6. The apparatus of claim 3, **characterised in that** a device for transmission is located at each of the stations (9 and 10), which device can be activated on command to transmit rotation to the rollers (13) of the roller planes of the stillages (8); the device being constituted by an elongate horizontal frame (11) which is commanded to translate in a vertical direction and which is provided with a series of organs (12) for moving the rollers (13) of the roller planes of the stillages (8).

7. The apparatus of claim 3 or 6, **characterised in that** the stations (9 and 10) in which the stillages (8) are positioned are aligned with a production line (20); the mobile roller plane (7) for transferring the layers of tiles (5) from the fixed roller planes (2) to the stillages (8), or vice versa, being translatable in a parallel direction to an axis of the production line (20) between three positions: a first position, in which the mobile roller plane (7) faces the fixed roller plane; and two more positions in which the mobile roller plane (7) faces the stillages (8) positioned in the two stations (9 and 10).

8. The apparatus of claim 1, **characterised in that** the frontal width, perpendicular to a direction of transport of the tiles, of the mobile roller plane (7') is equal to a frontal size of the roller planes of the stillage (8), to which it is coupled; the external side of the fixed roller plane (2) is perpendicular to the direction along which the rows (6) of tiles, formed on the line (1) are translated and accumulated to form layers on the fixed roller plane (2), and exhibits at least one tract of length which is equal to the width of the mobile roller plane (7'), to which at least one tract of length the mobile roller plane (7) can be coupled.

9. The apparatus of claim 8, **characterised in that** the means for translating (4) comprise a plurality of conveyor chains (4) positioned between the parallel rollers (3) constituting the mobile roller plane (7'), which can be raised on command from an inactive lower position into an active upper position at which a rest and transport plane is created for the tiles (5) located above the conveyor plane generated by the parallel rollers (3).

## Patentansprüche

1. Vorrichtung zum Be- und Entladen von Fliesen (5) von Rollenpaletten, enthaltend: eine feststehende Rollenfläche (2), beschickt durch eine Förderbahn zum Bilden von Lagen von Fliesen, welche feststehende Rollenfläche (2) der Förderbahn ( 1 ) zugeordnet ist, so dass Reihen (6) von Fliesen (5), die auf der Förderbahn gebildet sind, auf die feststehende Rollenfläche übertragen werden können, und zwar in einer Richtung lotrecht zu den auf der Förderbahn geformten Reihen; eine bewegliche Rollenfläche zum Übertragen der Lagen von Fliesen von der feststehenden Rollenfläche zu den einzelnen Rollenflächen der Rollenpaletten und umgekehrt, wobei die bewegliche Rollenfläche (7) mit der feststehenden Rollenfläche (2) in einer Position verbindbar ist, welche einer Aussenseite der feststehenden Rollenfläche (2) zugewandt ist; wobei die Rollen (3) der feststehenden Rollenfläche (2) lotrecht zu der Richtung angeordnet sind, entlang welcher die auf der Förderbahn (1, 20) geformten Reihen (6) von Fliesen (5) übertragen und auf der feststehenden Rollenfläche (2) gesammelt werden; wobei Mittel vorgesehen sind, um das gesteuerte Übertragen der auf der feststehenden Rollenfläche (2) angesammelten Fliesen auf die bewegliche Rollenfläche (7) zu ermöglichen, und zwar in einer lotrechten Richtung zu der Richtung, entlang welcher die Reihen (6) von Fliesen (5) auf der Förderbahn (1) angesammelt sind; wobei die bewegliche Rollenfläche (7) in einer vertikalen Ebene positionierbar ist, angeordnet parallel oder lotrecht zu der Aussenseite der feststehenden Rollenfläche, um sie mit den Rollenflächen von wenigstens zwei Rollenpaletten (8) zu verbinden, die in wenigstens zwei Be- oder Entladestationen (9 und 10) Seite an Seite positioniert sind.

2. Vorrichtung nach Patentanspruch 1, **dadurch gekennzeichnet, dass** die frontale Breite der beweglichen Rollenfläche (7), lotrecht zu der Transportrichtung, gleich ist wie die entsprechende frontale Breite der Rollenflächen in den Rollenpaletten (8), mit welchen die bewegliche Rollenfläche (7) verbunden wird; wobei die Aussenseite zum Be- oder Entladen der feststehenden Rollenfläche (2), parallel zu der lotrechten Richtung, entlang welcher die auf der Förderbahn geformten Reihen (6) von Fliesen weitergeleitet und zum Bilden einer Lage von Fliesen auf der feststehenden Rollenfläche (2) angesammelt werden, wenigstens einen Abschnitt hat, dessen Länge der frontalen Breite der beweglichen Rollenfläche (7) entspricht, und an welchen wenigstens einen Längenabschnitt die bewegliche Rollenfläche (17) angeschlossen werden kann.

3. Vorrichtung nach Patentanspruch 1 oder 2, **dadurch gekennzeichnet, dass** die Mittel zum gesteuerten Übertragen eine Anzahl von Förderketten (4) enthalten, positioniert zwischen den parallelen Rollen (3) der feststehenden Rollenfläche (2), welche Anzahl von Förderketten (4) durch einen Antrieb aus einer nicht aktiven unteren Position in eine aktive obere Position angehoben werden kann, in welcher eine Auflage- und Transportfläche für die Fliesen (5) gebildet wird, die oberhalb der durch die parallelen Rollen (3) erzeugten Förderebene angeordnet sind.

4. Vorrichtung nach Patentanspruch 3, **dadurch gekennzeichnet, dass** die Be- und Entladestationen (9, 10), welche die Rollenpaletten (8) aufnehmen, durch eine Vorrichtung zum Übertragen, mit Hilfe eines Antriebes, des Drehantriebs auf die Rollen (13) der Rollenflächen in den Rollenpaletten (8) voneinander getrennt sind; wobei die Übertragungsvorrichtung angetrieben ist, um sich in einer vertikalen Richtung zu verschieben und mit zwei Serien von Elementen (12) zum Bewegen der Rollen (13) verse-hen ist, welche sich diametral gegenüberliegen und unabhängig voneinander ausgelöst werden, um mit den Enden der Rollen (13) in den Rollenpaletten zusammenzuwirken.

5. Vorrichtung nach Patentanspruch 5, **dadurch gekennzeichnet, dass** jede der Serien von Elementen (12) zum Bewegen der Rollen (13) an einem Trägerelement (14) montiert ist, welches durch Triebe (15) gesteuert wird, um sich von einer internen Ruheposition in eine äussere Arbeitsposition zu bewegen, in welcher die Serien von Elementen (12) mit den Enden der Rollen (13) in der Rollenpalette (8) zusammenwirken; wobei diese Wirkung umkehrbar ist.

6. Vorrichtung nach Patentanspruch 3, **dadurch gekennzeichnet, dass** eine Vorrichtung zum Übertragen an einer jeden der Stationen (9 und 10) angeordnet ist, welche Vorrichtung auf einen Befehl hin aktiviert werden kann, um die Umdrehung auf die Rollen (13) der Rollenflächen in den Rollenplatten (8) zu übertragen; wobei die Vorrichtung aus einem länglichen horizontalen Rahmen (11) gebildet ist, welcher angetrieben wird, um sich in einer vertikalen Richtung zu verschieben, und welcher mit einer Serie von Elementen (12) zum Bewegen der Rollen (13) der Rollenflächen in den Rollenpaletten (8) versehen ist.

7. Vorrichtung nach Patentanspruch 3 oder 6, **dadurch gekennzeichnet, dass** die Stationen (9 und 10), in welchen die Rollenpaletten (8) positioniert sind, zu einer Produktionslinie (20) ausgerichtet sind; wobei die bewegliche Rollenfläche (7) zum Übertragen der Lagen von Fliesen (5) von der feststehenden Rollenfläche (2) an die Rollenpaletten (8) oder umgekehrt in einer Richtung parallel zu einer Achse der Produktionslinie (20) verschiebbar ist, und zwar zwischen drei Positionen: einer ersten Position, in welcher die bewegliche Rollenfläche (7) der feststehenden Rollenfläche zugewandt ist; und zwei weiteren Positionen, in welchen die bewegliche Rollenfläche (7) den in den beiden Stationen (9 und 10) positionierten Rollenpaletten (8) zugewandt ist.

8. Vorrichtung nach Patentanspruch 1, **dadurch gekennzeichnet, dass** die frontale Breite der beweglichen Rollenfläche (7'), lotrecht zu einer Transportrichtung der Fliesen, gleich ist wie eine frontale Abmessung der Rollenflächen in der Rollenpalette (8), mit welcher sie verbunden ist; wobei die Aussenseite der feststehenden Rollenfläche (2) lotrecht zu der Richtung verläuft, entlang welcher die auf der Förderbahn (1) geformten Reihen (6) von Fliesen geleitet und angesammelt werden, um Lagen auf der feststehenden Rollenfläche (2) zu bilden, und wenigstens einen Abschnitt von einer Länge aufweist, welche gleich ist wie die Breite der beweglichen Rollenfläche (7'), und an welchen wenigstens einen Längenabschnitt die bewegliche Rollenfläche (7) angeschlossen werden kann.

9. Vorrichtung nach Patentanspruch 8, **dadurch gekennzeichnet, dass** die Mittel zum Übertragen (4) eine Anzahl von Förderketten (4) enthalten, positioniert zwischen den parallelen Rollen (3), welche die bewegliche Rollenfläche (7') bilden, und die durch einen Antrieb aus einer nicht aktiven unteren Position in eine aktive obere Position angehoben werden können, in welcher sie eine Auflage- und Transportfläche für die Fliesen (5) bilden, die oberhalb der durch die parallelen Rollen (3) gebildeten Förderebene angeordnet sind.

## Revendications

1. Dispositif pour le chargement et le déchargement de tuiles (5) de palettes à rouleaux, comprenant: un plan à rouleaux fixe (2), fourni par une ligne de convoyage pour la formation de couches de tuiles, lequel plan à rouleaux fixe (2) est associé à la ligne de convoyage (1) de manière à ce que des files (6) de tuiles (5) formées sur la ligne de convoyage puissent être translatées sur le plan à rouleaux fixe dans une direction perpendiculaire aux files formées sur la ligne de convoyage; un plan à rouleaux mobile pour transférer les couches de tuiles du plan à rouleaux fixe à des plans à rouleaux individuels des palettes et vice versa, le plan à rouleaux mobile (7, 7') pouvant etre accouplé avec le plan à rouleaux fixe (2) dans une position faisant face à un coté externe du plan à rouleaux fixe (2); les rouleaux (3) du plan à rouleaux fixe (2) étant perpendiculaires à la direction le long de laquelle les files (6) de tuiles (5) formées sur la ligne de convoyage (1, 20) sont translatées et accumulées sur le plan à rouleaux fixe (2); des moyens étant prévus pour permettre la translation contrôlée des tuiles accumulées sur le plan à rouleaux fixe (2) vers le plan à rouleau mobile (7) dans une direction perpendiculaire à la direction le long de laquelle les files (6) de tuiles (5) sont accumulées sur la ligne de convoyage (1); le plan à rouleaux mobile (7) pouvant être positionné dans un plan vertical disposé parallèlement et perpendiculairement au côté externe du plan à rouleaux fixe de manière à être accouplé aux plans à rouleaux d'au moins deux palettes (8) disposées en au moins deux stations de chargement ou de déchargement (9 et 10) situées côte à côte.

2. Dispositif selon la revendication 1, **caractérisé en ce qu'**une largeur frontale du rouleau mobile (7), perpendiculaire à la direction de transport, est égale à une largeur frontale correspondante des plans à rouleaux des palettes (8) auxquels le rouleau mobile est accouplé; le côté externe de chargement et de déchargement du plan à rouleaux fixe (2), parallèle à la direction perpendiculaire le long de laquelle les files (6) de tuiles formées sur la ligne de convoyage sont translatées et accumulées pour former une couche de tuiles sur le plan à rouleaux fixe (2), ayant au moins une portion de longueur égale à la largeur frontale du plan à rouleaux mobile (7), à laquelle au moins une portion de longueur du plan à rouleaux mobile (7) peut être accouplée.

3. Dispositif selon la revendication 1 ou 2, **caractérisé en ce que** les moyens de contrôle de la translation comprennent une pluralité de courroies de convoyage (4) positionnées entre les rouleaux parallèles (3) du plan à rouleaux fixe (2), laquelle pluralité de courroies de convoyage (4) peut être soulevée sur commande d'une position inférieure inactive à une position supérieure active dans laquelle se crée un plan d'appui et de transport pour les tuiles (5) disposées au-dessus du plan de convoyage généré par les rouleaux parallèles (3).

4. Dispositif selon la revendication 3, **caractérisé en ce que** les stations de chargement et de déchargement (9, 10) accueillant les palettes (8) sont séparées par un dispositif de transmission, sur commande, du mouvement de rotation aux rouleaux (13) des plans à rouleaux des palettes (8); le dispositif de transmission étant commandé pour translater dans une direction verticale et étant pourvu de deux séries d'organes (12) pour la mise en mouvement des rouleaux (13) qui sont diamétralement opposés et actionnés indépendamment l'un de l'autre pour interagir avec des extrémités des rouleaux (13) des palettes.

5. Dispositif selon la revendication 5, **caractérisé en ce que** chacune des séries d'organes (12) pour la mise en mouvement des rouleaux (13) est montée sur un élément de support (14) commandé pour se mouvoir par des actionneurs (15) d'une position de repos interne à une position de travail externe, dans laquelle les séries d'organes (12) interagissent avec les extrémités des rouleaux (13) d'une palette (8); cette action est réversible.

6. Dispositif selon la revendication 3, **caractérisé en ce qu'**un dispositif de transmission est situé sur chacune des stations (9 et 10), lequel dispositif pouvant être activé sur commande pour transmettre le mouvement de rotation aux rouleaux (13) des plans à rouleaux des palettes (8); le dispositif étant constitué d'un châssis horizontal allongé (11) commandé pour translater dans une direction verticale et pourvu de séries d'organes (12) pour mettre en mouvement les rouleaux (13) des plans à rouleaux des palettes (8).

7. Dispositif selon la revendication 3 ou 6, **caractérisé en ce que** les stations (9 et 10) dans lesquelles les palettes (8) sont positionnées et alignées avec une ligne de production (20); le plan à rouleaux mobile (7) pour transférer les couches de tuiles (5) des plans à rouleaux fixes (2) aux palettes (8), ou vice versa, pouvant être translaté dans une direction parallèle à un axe de la ligne de production (20) entre trois positions: une première position, dans laquelle le plan à rouleaux mobile (7) fait face au plan à rouleaux fixe; et deux autres positions dans lesquelles le plan à rouleaux mobile (7) fait face aux palettes (8) positionnées dans les deux stations (9 et 10) .

8. Dispositif selon la revendication 1, **caractérisé en ce que** la largeur frontale, perpendiculaire à une direction de transport des tuiles, du plan à rouleaux mobile (7') est égale à la dimension fronta.le des plans à rouleaux des palettes (8), auxquels il est accouplé; le côté externe du plan à rouleaux fixe (2) est perpendiculaire à la direction le long de laquelle les files (6) de tuiles formées sur la ligne (1) sont translatées et accumulées pour former des couches sur le plan à rouleaux fixe (2), et présente au moins une portion de longueur égale à la largeur du plan à rouleaux mobile (7'), auquel au moins une portion de longueur du plan à rouleaux mobile (7) peut être accouplée.

9. Dispositif selon la revendication 8, **caractérisé en ce que** les moyens de translation (4) comprennent une pluralité de courroies de convoyage (4) positionnées entre les rouleaux parallèles (3) constituant le plan à rouleaux mobile (7'), pouvant être soulevé sur commande d'une position inférieure inactive à une position supérieure active dans laquelle se crée un plan d'appui et de transport pour les tuiles (5) disposées au-dessus du plan de convoyage généré par les rouleaux parallèles (3) .
